# EUROPEAN PATENT APPLICATION

(11) **EP 1 988 590 A1**
(43) Date of publication of application: **05.11.2008**
(21) Application number: 07792109.6
(22) Date of filing: 07.08.2007
(51) Int. Cl.: H01M 4/42, C22C 18/00, H01M 4/06, H01M 4/50, H01M 4/52, H01M 4/62, H01M 6/06

(54) **ALKALINE BATTERY**

(30) Priority: 10.08.2006 JP 2006218192
(71) Applicant: Matsushita Electric Industrial Co., Ltd., Kadoma-shi Osaka 571-8501 (JP)
(72) Inventor: KATO, Fumio Matsushita Electric Industrial co., Ltd., Chuo-ku, Osaka 540-6207 (JP); NUNOME, Jun Matsushita Electric Industrial co., Ltd., Chuo-ku, Osaka 540-6207 (JP); SHIMAMURA, Harunari Matsushita Electric Industrial co., Ltd., Chuo-ku, Osaka 540-6207 (JP)
(74) Representative: TBK-Patent
(86) International application number: PCT/JP2007/065440
(87) International publication number: WO 2008/018455

(57) **Abstract**

An alkaline battery of the present invention includes a positive electrode, a negative electrode, a separator, and an alkaline electrolyte. The positive electrode includes nickel oxyhydroxide and manganese dioxide as a positive electrode active material. The negative electrode includes at least zinc as a negative electrode active material. The content of indium in the negative electrode active material is 0.02 wt% or less.

## Description

### Technical Field

The present invention relates to an alkaline battery including zinc as a negative electrode active material, nickel oxyhydroxide and manganese dioxide as a positive electrode active material, and an aqueous alkaline solution as an electrolyte.

### Background Art

Alkaline batteries represented by alkaline manganese dry batteries, because of their general-purpose application and low prices, have been widely used as power sources for various equipment. In association with the proliferation of digital equipment in recent years, there has been a gradual increase in the load power of the equipment for which these batteries are used. Therefore, the development of batteries with excellent heavy-load discharge performance has been demanded. In response to this demand, Patent Document 1 suggests adding nickel oxyhydroxide into the positive electrode material mixture in order to obtain excellent heavy-load discharge characteristics. In recent years, such alkaline batteries that include nickel oxyhydroxide in the positive electrode material mixture (nickel manganese batteries) have been put into practical use, and are now widely used.

Nickel oxyhydroxide used in nickel manganese batteries is generally obtained by oxidizing spherical nickel hydroxide as used in alkaline storage batteries (Patent Document 2) with an oxidant, such as an aqueous sodium hypochlorite solution. For the spherical nickel hydroxide serving as a starting material, β-type nickel hydroxide having a high bulk density (tap density) is used. Oxidizing this β-type nickel hydroxide yields β-type spherical nickel oxyhydroxide.

For the negative electrode, the same component materials as used in alkaline manganese dry batteries are used. For example, Patent Document 3 suggests using a zinc alloy powder including small amounts of aluminum, bismuth and indium as a negative electrode active material in order to improve the corrosion resistance of the negative electrode.

Problems associated with the negative electrode in nickel manganese batteries include: (i) the gas evolution (corrosion of zinc) in the negative electrode side due to impurities derived from nickel oxyhydroxide is more accelerated than that in alkaline manganese batteries; and (b) the positive electrode has a high output performance, and accordingly, the negative electrode also needs to have a high output performance. With regard to (i), Patent Document 4 suggests including bismuth in the zinc alloy in an amount of 0.015 to 0.05 wt% in order to further improve the corrosion resistance. With regard to (ii), Patent Document 5 suggests using a zinc powder including a fine powder of 200 mesh (75 µm) or less in an amount of 5 wt% or more.
Patent Document 1: Japanese Laid-Open Patent Publication No. Sho 57-72266
Patent Document 2: Japanese Patent Publication No. Hei 4-80513
Patent Document 3: Japanese Patent Publication No. Hei 3-71737
Patent Document 4: Japanese Laid-Open Patent Publication No. 2006-40887
Patent Document 5: Japanese Laid-Open Patent Publication (Translation of PCT Application) No. 2005-537624

### Disclosure of the Invention

### Problem To be Solved by the Invention

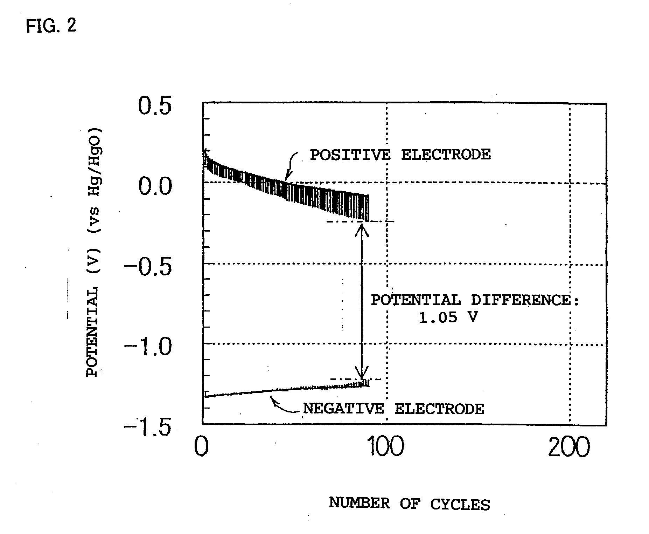

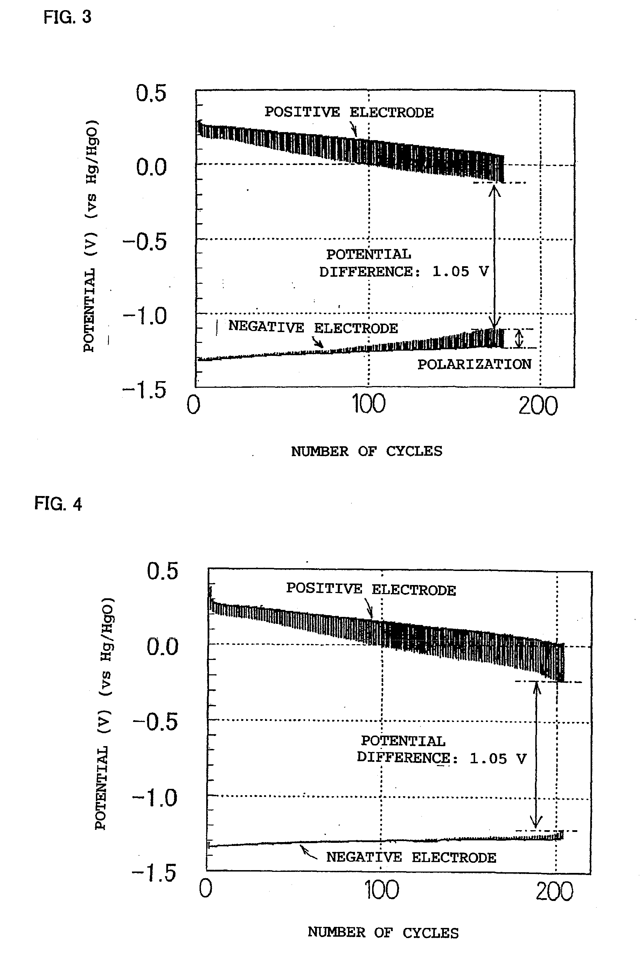

Nickel manganese batteries are excellent in heavy-load characteristics as compared with ordinary alkaline manganese dry batteries. However, the characteristics thereof have not reached a satisfactory level. This is evident, for example, from the following pulse discharge test simulating the use in a digital still camera performed with respect to the conventional alkaline manganese dry batteries and the nickel manganese batteries. Specifically, each of the batteries (one cell) is first discharged for 28 seconds at a constant power of 650 mW in a 20°C atmosphere, and then discharged for two seconds at a constant power of 1500 mW. This operation is regarded as one cycle and repeated until the lower limit voltage during the 1500 mW pulse discharge reaches 1.05 V to measure the number of cycles repeated. The measurement results are shown in FIG. 2 and FIG. 3. The positive electrode potential and the negative electrode potential as shown in FIG. 2 and FIG. 3 are values versus a Hg/HgO reference electrode, which are obtained by the measurement in a state where, after the provision of a hole in the positive electrode case, the liquid junction is formed between the positive and negative electrodes and the external Hg/HgO reference electrode through a salt bridge.

The pulse discharge characteristics are improved in the nickel manganese batteries (FIG. 3) as compared with those in the alkaline manganese dry batteries (FIG. 2). This is presumably because in the nickel manganese batteries, the potential at the positive electrode during discharging is high and the potential curve has a plateau. In other words, the nickel manganese batteries have excellent heavy-load pulse discharge characteristics as compared with conventional alkaline manganese batteries.

Here, in the alkaline manganese batteries, since the number of cycles repeated until the discharge is terminated is small, there is almost no variation in the output performance of the negative electrode. In the alkaline manganese batteries, the potential of manganese dioxide in the positive electrode is low from the early stage of cycles. For this reason, the polarization behavior in the battery as a whole is dependent on the positive electrode. On the other hand, in the nickel manganese batteries, the degree of polarization in the negative electrode side is increased. Because of this, the discharge is terminated when the positive electrode potential is still in a considerably high region. In other words, the improvement in output (inhibition of polarization) in the negative electrode side is insufficient as compared with that in the positive electrode.
Even with the use of a zinc powder including a fine powder of 200 mesh (75 µm) or less in an amount of 5 wt% or more, a sufficient effect of inhibiting the polarization in the negative electrode has not yet been obtained.

In view of the above, the present invention intends to provide an alkaline battery capable of inhibiting the polarization in the negative electrode unique to the nickel manganese batteries and having excellent heavy-load pulse discharge characteristics.

### Means for Solving the Problem

The present invention relates to an alkaline battery comprising a positive electrode, a negative electrode, a separator, and an alkaline electrolyte, wherein the positive electrode includes nickel oxyhydroxide and manganese dioxide as a positive electrode active material, the negative electrode includes at least zinc as a negative electrode active material, and the content of indium in the negative electrode active material is 0.02 wt% or less.
In other words, the negative electrode active material in the present invention contains at least zinc or an alloy of zinc and indium (a zinc alloy). Accordingly, as long as the effect of the present invention is not impaired, the foregoing negative electrode active material may contain other elements (including aluminum, bismuth, and calcium as described below). For example, as the negative electrode active material, an alloy of zinc and other metals or an alloy of zinc, indium, and other metals may be used.

According to the configuration of the alkaline battery of the present invention, it is possible to inhibit the polarization in the negative electrode in the final stage of pulse discharge cycles, which is unique to the nickel manganese batteries. As such, the heavy-load pulse discharge characteristics of the alkaline battery can be significantly improved.

It is preferable that the negative electrode active material contains at least one selected from 0.001 to 0.02 wt% of aluminum and 0.001 to 0.015 wt% of bismuth.
It is further preferable that the negative electrode active material contains 0.001 to 0.02 wt% of calcium.

It is preferable that the negative electrode or the alkaline electrolyte includes at least one compound selected from the group consisting of a tetramethylammonium compound, a tetraethylammonium compound, and a tetrapropylammonium compound in an amount of 0.002 to 0.02 part by weight per 100 parts by weight of the negative electrode active material.
It is preferable that at least one compound as described above is a hydroxide.

It is preferable that the negative electrode or the alkaline electrolyte includes an anionic surfactant having an alkyl group in an amount 0.01 to 0.5 part by weight per 100 parts by weight of the negative electrode active material.
It is preferable that the anionic surfactant is an alkane sulfonic acid with a carbon number of 5 to 18 or a salt thereof.

### Effect of the present invention

According to the present invention, it is possible to provide an alkaline battery being capable of inhibiting the polarization in the negative electrode unique to the nickel manganese batteries and having excellent heavy-load pulse discharge characteristics.

### Brief Description of the Drawings

[FIG. 1] A partially cross-sectional front view of an alkaline dry battery according to one embodiment of the present invention.
[FIG. 2] A graph showing polarization curves of the positive and negative electrodes during DSC pulse discharge cycles in a typical alkaline manganese dry battery.
[FIG. 3] A graph showing polarization curves of the positive and negative electrodes during DSC pulse discharge cycles in a nickel manganese battery (1) of Experimental Example 1.
[FIG. 4] A graph showing polarization curves of the positive and negative electrodes during DSC pulse discharge cycles in a nickel manganese battery (5) of Experimental Example 1.

### Best Mode for Carrying Out the Invention

The present invention provides an alkaline battery comprising a positive electrode, a negative electrode, a separator, and an alkaline electrolyte, wherein the positive electrode includes nickel oxyhydroxide and manganese dioxide as a positive electrode active material, the negative electrode includes at least zinc as a negative electrode active material, and the content of indium in the negative electrode active material is 0.02 wt% or less.

With respect to the conventional problems as described above, the inventors of the present invention have conducted intensive studies, and as a result, it has revealed that the indium element included in the negative electrode active material increases the degree of polarization in the negative electrode in the final stage of a pulse discharge. Although the reason for this has not been identified yet, this is presumably because the redox potential value of zinc represented by the formula (1) as shown below and the redox potential value of indium represented by the formula (2) as shown below are close to each other. In other words, when the potential at the negative electrode is increased as the discharge reaction of zinc proceeds, the indium present unevenly in particle boundaries (active sites) in the alloy becomes gradually oxidized or nonconductive. This presumably causes a sharp increase in the degree of polarization in the negative electrode.

Zn + 2OH⁻ → Zn(OH)₂ + 2e⁻ E₀ = -1.36 V (vs Hg/HgO) (1)

In + 3OH⁻ → In(OH)₃ +3e⁻ E₀ = -1.18 V (vs Hg/HgO) (2)

For the reasons above, in the present invention, indium, which is considered to increase the degree of polarization in the negative electrode, is contained in the negative electrode active material in an amount of 0.02 wt% or less, so that the degree of polarization in the negative electrode in the final stage of pulse discharge cycles is decreased. This improves the discharge performance in the negative electrode side and improves the heavy-load pulse discharge characteristics. A content of indium exceeding 0.02 wt% is not preferred because this increases the degree of polarization in the negative electrode during discharge. As the negative electrode active material of the present invention, an alloy containing at least zinc and other elements as described below may be used. For the negative electrode active material, it is possible to use a zinc powder or a zinc alloy powder obtained by, for example, a gas atomizing method.
A content of indium of 0.005 wt% or more in the negative electrode active material is preferred because the addition of indium provides an effect of improvement in the corrosion resistance in the negative electrode.

It is preferable that the negative electrode active material contains 0.001 to 0.02 wt% of aluminum, 0.001 to 0.015 wt% of bismuth, or both of these. A content of aluminum of 0.001 wt% or more in the negative electrode active material can provide an excellent corrosion resistance. Moreover, a content of aluminum of 0.02 wt% or less in the negative electrode active material can prevent a discharge at a light load or a low temperature from resulting in a short life.
This short life is caused by a micro short-circuit resulted from a dendrite growth in the zinc negative electrode. The aluminum contained in the zinc alloy tends to be present unevenly in the surface layer of zinc alloy particles. It is considered that when the content of the aluminum is great, the reactivity in the surface layer of the alloy is changed, and the growth of dendrites is accelerated, resulting in a short life of the battery.

Further, a content of bismuth of 0.001 wt% or more in the negative electrode active material can provide an excellent corrosion resistance. Moreover, a content of bismuth of 0.015 wt% or less in the negative electrode active material can suppress the reduction in high-rate continuous discharge characteristics at a low temperature. In other words, the inclusion of at least one selected from aluminum and bismuth in the negative electrode active material can improve the corrosion resistance. In particular, in nickel manganese batteries, in which a large amount of impurity ions and the like derived from nickel oxyhydroxide are present in the electrolyte, an excellent corrosion resistance can be obtained by the addition of at least one selected from aluminum and bismuth.

The redox potential of aluminum is sufficiently lower than that of zinc, and the redox potential of bismuth is sufficiently higher than that of zinc. Because of this, aluminum and bismuth hardly inhibit discharge as compared with indium. Accordingly, with the use of a zinc alloy containing aluminum and/or bismuth as the negative electrode active material in an alkaline battery, a battery having excellent heavy-load pulse discharge characteristics as well as an excellent corrosion resistance can be obtained.

The negative electrode active material preferably contains calcium in an amount of 0.001 to 0.02 wt%. A content of calcium of 0.001 wt% or more in the negative electrode active material can provide excellent corrosion resistance.
It should be noted that calcium also acts as a cause of short life of the battery for the same reason as for aluminum as described above. Therefore, when the content of calcium is 0.02 wt% or less in the negative electrode active material, it is possible to prevent a discharge at a light load or a low temperature from resulting in a short life. The additional inclusion of calcium in the foregoing negative electrode active material containing at least one selected from aluminum and bismuth is preferred because this can further improve the corrosion resistance.

Since the redox potential of calcium is also sufficiently lower than that of zinc, calcium hardly inhibits discharge. Accordingly, in an alkaline battery, by using a zinc alloy containing at least one selected from aluminum or bismuth and further containing calcium is used as the negative electrode active material, excellent heavy-load pulse discharge characteristics as well as an improved corrosion resistance can be obtained.

In the negative electrode active material of the present invention, the content of indium is 0.02 wt% or less. Indium has an excellent corrosion resistance. It should be noted that the content of indium in the present invention is smaller than the typical content thereof. For this reason, it is considered that the zinc alloy is readily corroded during the storage of the battery. Therefore, it is preferable that the negative electrode or the alkaline electrolyte includes at least one compound selected from the group consisting of a tetramethylammonium compound, a tetraethylammonium compound, and a tetrapropylammonium compound, in an amount 0.002 to 0.02 part by weight per 100 parts by weight of the negative electrode active material. These compounds are cationic surfactants having a high molecular symmetry. The inclusion of such compounds enables the formation of a protective coating layer on the surface of zinc alloy particles. The protective coating layer is closely packed and is excellent in desorbing property from the zinc alloy particles during discharge. This makes it possible to achieve an excellent anticorrosion effect and to maintain excellent discharge characteristics.

A content of the foregoing compound of 0.002 part by weight or more per 100 parts by weight of the negative electrode active material can provide an excellent anticorrosion effect. On the other hand, a content of the foregoing compound of 0.02 part by weight or less per 100 parts by weight of the negative electrode active material makes it possible to maintain an excellent discharge performance. Examples of the compound include, for example, a hydroxide, a chloride, a bromide, and the like. Among these, it is preferable that the compound is a hydroxide because this can provide more excellent anticorrosion effect. Not only one but also two or more of these compounds may be included in the negative electrode or the alkaline electrolyte.

The negative electrode or the alkaline electrolyte preferably includes an anionic surfactant having an alkyl group in an amount of 0.01 to 0.5 part by weight per 100 parts by weight of the negative electrode active material. A content of the anionic surfactant having an alkyl group of 0.01 part by weight or more per 100 parts by weight of the negative electrode active material can provide an excellent anticorrosion effect. Further, a content of the anionic surfactant having an alkyl group of 0.5 part by weight or less per 100 parts by weight of the negative electrode active material makes it possible to maintain an excellent discharge performance. Examples of the anionic surfactant having an alkyl group include, for example, an alcohol sulfonic acid ester or a salt thereof, an alcohol phosphoric acid ester or a salt thereof, and the like.

In the foregoing, the anionic surfactant is preferably an alkane sulfonic acid with a carbon number of 5 to 18 or a salt thereof. The alkane sulfonic acid or a salt thereof is most preferred because it is stable in an aqueous alkaline solution and does not readily form an insoluble salt and the like with impurity ions, and in addition, the environmental load thereof is small. When the carbon number is 5 or more in the alkane sulfonic acid or a salt thereof, the water repellency of the protective coating layer to be formed on the surface of zinc particles is improved. This can provide an excellent anticorrosion effect. On the other hand, when the carbon number is less than 19, the surfactant can readily move in the electrolyte. In other words, the surfactant molecules are readily desorbed from the surface of zinc particles during discharge. Because of this, the surfactant molecules will not inhibit the discharge reaction. This can provide excellent discharge characteristics.
Examples of the salt of alkane sulfonic acid include, for example, a sodium salt, a potassium salt, and the like. In view of the availability and costs, it is preferable to use a sodium salt.

The foregoing alkane sulfonic acid or a salt thereof may be used alone or in combination with an alkane sulfonic acid having a hydrophobic group with a different carbon number or a salt of the alkane sulfonic acid. The one having a hydrophobic group (a portion represented by CₙH₂ₙ₊₁) with a linear-chain structure or partly with a side-chain structure may be used.

For the positive electrode, it is possible to use, for example, a pellet of positive electrode material mixture obtained in the manner as described below. Specifically, manganese dioxide and nickel oxyhydroxide serving as a positive electrode active material are mixed with graphite serving as a conductive material to give a mixed powder. To the mixed powder, an electrolyte is added, and stirred and mixed uniformly with a mixer to obtain particles with a certain particle size, whereby a positive electrode material mixture is obtained. This positive electrode material mixture is molded under pressure into a hollow cylindrical shape to give a pellet of positive electrode material mixture. In the foregoing positive electrode active material, a preferred content of manganese dioxide is 20 to 90 wt%. Moreover, in the foregoing positive electrode active material, a preferred content of nickel oxyhydroxide is 80 to 10 wt%.
The nickel oxyhydroxide is prepared by, for example, chemically oxidizing nickel hydroxide with an aqueous sodium hypochlorite solution. The nickel hydroxide is prepared by, for example, neutralizing an aqueous nickel sulfate solution with alkali.

For the electrolyte included in the battery of the present invention, it is possible to use a conventionally known alkaline electrolyte. Examples of the electrolyte include, for example, a potassium hydroxide solution, a mixed solution of potassium hydroxide and lithium hydroxide, and the like. In the case of the potassium hydroxide solution, it is preferable that potassium hydroxide is contained in the solution in an amount of 30 to 40 wt%.

To the foregoing negative electrode active material, the foregoing anticorrosive (surfactant), the electrolyte, and a gelling agent are added and formed into a gel in a conventional manner, whereby a gelled negative electrode is obtained. For the gelling agent for forming a gelled negative electrode, a conventionally known one may be used. For example, it is possible to use sodium polyacrylate and the like.
For the separator, as in the case above, a conventionally known one may be used. For example, it is possible to use a composite fiber made of vinylon and cellulose, a composite fiber made of polypropylene and cellulose, and the like.

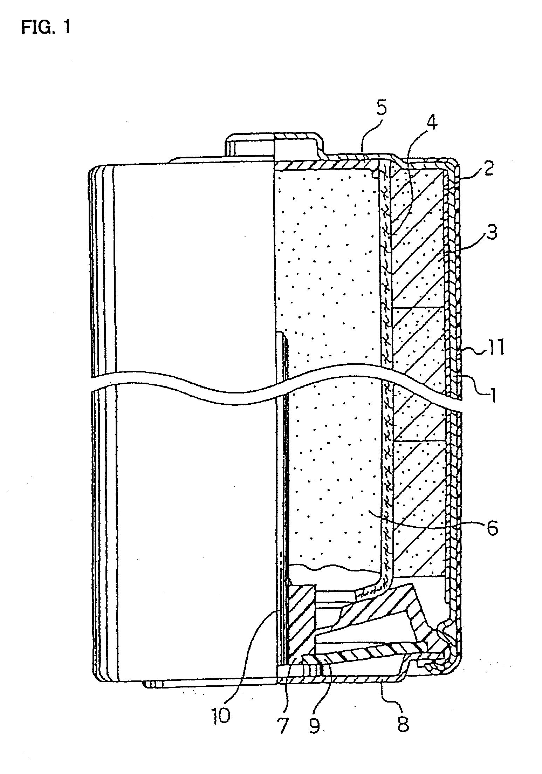

A description is given below of an alkaline dry battery which is an embodiment of the present invention. As shown in FIG. 1, this alkaline dry battery includes pellets 3 of positive electrode material mixture, and a gelled negative electrode 6 including the anticorrosive, the pellets 3 of positive electrode material mixture and the gelled negative electrode 6 being in contact with each other with a separator 4 interposed therebetween. A positive electrode case 1 is made of a nickel-plated steel plate. A graphite coating film 2 is formed in the interior the positive electrode case 1.

The alkaline dry battery as shown FIG. 1 can be fabricated in the following manner. Specifically, a plurality of the hollow cylindrical pellets 3 of positive electrode material mixture including the positive electrode active material are inserted in the interior of the positive electrode case 1 and are repressed to be brought into close contact with the inner face of the positive electrode case 1. Next, the separator 4 and a bottom paper 5 for insulation are inserted in the inside of the pellets 3 of positive electrode material mixture. Thereafter, an electrolyte is injected for the purpose of wetting the separator 4 and the pellets 3 of positive electrode material mixture. After the injection of the electrolyte, the gelled negative electrode 6 is charged into the inside of the separator 4. Subsequently, a negative electrode current collector 10, which is integrated with a resin sealing plate 7, a bottom plate 8 also serving as a negative electrode terminal, and an insulating washer 9, is inserted into the gelled negative electrode 6. The open edge of the positive electrode case 1 is crimped onto the circumference of the bottom plate 8 with the edge of the resin sealing plate 7 interposed therebetween, thereby to be brought into close contact with the opening of the positive electrode case 1. Lastly, the outer surface of the positive electrode case 1 is covered with an outer label 11, whereby the alkaline dry battery of the present invention can be obtained.

It should be noted that in the present invention the shape of the battery is not limited to an alkaline dry battery having a shape as described above. A battery having another structure, such as a battery of alkaline button type, prismatic type, or the like can be used with the same effect.

### Examples

In the following, examples of the present invention are described in detail; however, the present invention is not limited to these examples.

### <<Experimental Example 1>>

### (1) Preparation of Gelled Negative Electrode

A zinc ingot having a purity of 99.99% or more was melted at a temperature exceeding 500°C. To the molten ingot, each element was added such that the content ratio of each element was as shown in Table 1. These were dissolved uniformly to give a molten zinc alloy. Thereafter, this molten zinc alloy was sprayed (atomized) with a high-pressure gas into a powder to give a zinc alloy powder. The resultant zinc alloy powder was classified with a sieve such that the particle size was within a range of 35 to 300 meshes. The resultant material was used as a negative electrode active material. Here, the zinc alloy powder was measured for a particle size distribution with a laser diffraction particle size distribution meter. The mean particle diameter (D₅₀) of the zinc alloy powder was 135 pm, and the ratio of a zinc alloy powder having a particle diameter of 200 meshes (75 µm) or less was 25%.

**[Table 1]**

| Battery No. | Content of each element in the negative electrode active material (wt%) | | |
|---|---|---|---|
| | Al | Bi | In |
| (1) | 0.003 | 0.012 | 0.050 |
| (2) | 0.003 | 0.012 | 0.025 |
| (3) | 0.003 | 0.012 | 0.020 |
| (4) | 0.003 | 0.012 | 0.015 |
| (5) | 0.003 | 0.012 | 0.010 |
| (6) | 0.003 | 0.012 | 0.005 |
| (7) | 0.003 | 0.012 | 0 |

Next, to 100 parts by weight of a 36 wt% aqueous potassium hydroxide solution (containing 2 wt% zinc oxide), 2.3 parts by weight of sodium polyacrylate was added and mixed to be formed into a gel, whereby a gelled electrolyte was obtained. The gelled electrolyte thus obtained was thereafter allowed to stand for 24 hours to be sufficiently aged. To a predetermined amount of this gelled electrolyte, the negative electrode active material powder was added in an amount 1.8 times as much as that of the gelled electrolyte by weight ratio and sufficiently mixed, whereby a gelled negative electrode including the negative electrode active material as shown in FIG. 1 was prepared.

### (2) Preparation of Positive Electrode Material Mixture

Nickel oxyhydroxide, electrolytic manganese dioxide and graphite were blended in a weight ratio of 40:52:8. To 100 parts by weight of the resultant mixed powder, 1 part by weight of electrolyte was added, and then stirred and mixed uniformly with a mixer to obtain particles with a certain particle size. The particulate material thus obtained was molded under pressure into a hollow cylindrical shape to yield a pellet of positive electrode material mixture. For the manganese dioxide, HHTF (available from TOSOH Corporation) was used. For the graphite, SP-20 (available from Nippon Graphite Industries, Ltd.) was used.
The nickel oxyhydroxide was prepared in the manner as described below. First, an aqueous nickel sulfate solution was neutralized with alkali to give nickel hydroxide. The nickel hydroxide and an aqueous sodium hypochlorite solution were mixed to allow the nickel hydroxide to be chemically oxidized, whereby nickel oxyhydroxide was prepared.

### (3) Fabrication of Nickel Manganese Battery

In this Experimental Example, an AA-size nickel manganese battery having a structure as shown in FIG. 1 was fabricated.
In the interior of the positive electrode case 1, a plurality of the hollow cylindrical pellets 3 of positive electrode material mixture were inserted and repressed to be brought into close contact with the inner face of the positive electrode case 1. Next, the separator 4 and the bottom paper 5 were inserted in the inside of the pellets 3 of positive electrode material mixture. Thereafter, the foregoing electrolyte was injected. After the injection of the electrolyte, the gelled negative electrode 6 was charged into the inside of the separator 4.

Subsequently, the negative electrode current collector 10, which has been integrated with the resin sealing plate 7, the bottom plate 8 also serving as a negative electrode terminal, and the insulating washer 9, was inserted into the gelled negative electrode 6. The open edge of the positive electrode case 1 was crimped onto the circumference of the bottom plate 8 with the edge of the resin sealing plate 7 interposed therebetween, thereby to be brought into close contact with the opening of the positive electrode case 1. Lastly, the outer surface of the positive electrode case 1 was covered with the outer label 11, whereby the nickel manganese battery was fabricated.
In the foregoing fabrication of the nickel manganese battery, AA-size nickel manganese batteries (1) to (7) corresponding to each negative electrode active material in Table 1 were fabricated.

### [Evaluation Test]

With respect to the nickel manganese dry battery (one cell) fabricated in the foregoing, the following pulse discharge was performed.
Specifically, in a 20°C atmosphere, the cell was subjected to an operation in which the cell was discharged at a constant power of 650 mW for 28 seconds and then discharged at a constant power of 1500 mW for two seconds. This operation was regarded as one cycle and repeated until the lower limit voltage in the 1500 mW discharge reached 1.05 V, and the number of cycles repeated was measured. The average values obtained from this evaluation in the case that the number of test cells n = 3 (number of cycles) are shown in Table 2. This discharge pattern was employed to simulate the use in a digital still camera (DSC).
Specifically, the 650 mW discharge corresponds to the state where the power of the camera is turned on, and the liquid crystal monitor and the like are driven, and the 1500 mW discharge corresponds to a state where flash photography is performed with the camera.

**[Table 2]**

| Battery No. | Number of cycles repeated during pulse discharge |
|---|---|
| (1) | 179 |
| (2) | 180 |
| (3) | 201 |
| (4) | 202 |
| (5) | 206 |
| (6) | 204 |
| (7) | 210 |

The batteries (3) to (7) in which the content of indium in the negative electrode active material was 0.02 wt% or less exhibited improved pulse discharge characteristics as compared with the batteries (1) and (2) including a negative electrode active material containing a large amount of indium.

In order to clarify this phenomenon, with respect to one cell from the batteries (1) and (5), a hole was provided in the positive electrode case of each battery to form a liquid junction between the positive and negative electrodes and an external Hg/HgO reference electrode through a salt bridge. The battery in this state was subjected to a DSC pulse discharge in a 20°C atmosphere in the same pattern as described above to measure the variations in potential in the positive electrode and the negative electrode. The results of the battery (1) are shown in FIG. 3, and the results of the battery (5) are shown in FIG. 4.

In the case where a negative electrode active material containing a large amount of indium as was widely used in an alkaline manganese dry battery was applied to a nickel manganese battery, as shown in FIG. 3, the degree of polarization in the final stage of the pulse discharge was increased. Because of this, the discharge was terminated while the positive electrode potential was still in a relatively high region (potential reached in 1500 mW pulse discharge: approximately -0.1 V vs Hg/HgO). This indicated that the output performance in the negative electrode side was deficient as compared with the output performance in the positive electrode side, and the negative electrode failed to sufficiently follow the positive electrode.

In contrast, in the case where a negative electrode active material containing a small amount of indium was applied to a nickel manganese battery, as shown in FIG. 4, the degree of polarization in the final stage of the pulse discharge was decreased. This allowed the positive electrode to be discharged to a lower potential, resulting in an improved pulse discharge characteristics. In the batteries (3) to (7), because of the extremely small content of indium of 0.02 wt% or less in the negative electrode active material, the phenomenon in which the discharge in the negative electrode was inhibited by indium as described above did not appear, resulting in an excellent pulse discharge performance.

### <<Experimental Example 2>>

Nickel manganese batteries (11) to (35) were fabricated in the same manner as in Experimental Example 1 except that the elements included in the negative electrode active material were adjusted as shown in Table 3.

**[Table 3]**

| Battery No. | Content of each element in the negative electrode active material (wt%) | | | |
|---|---|---|---|---|
| | Al | Bi | Ca | In |
| (11) | 0 | 0 | 0 | 0.010 |
| (12) | 0.0005 | 0 | 0 | 0.010 |
| (13) | 0.001 | 0 | 0 | 0.010 |
| (14) | 0.010 | 0 | 0 | 0.010 |
| (15) | 0.020 | 0 | 0 | 0.010 |
| (16) | 0.025 | 0 | 0 | 0.010 |
| (17) | 0 | 0.0005 | 0 | 0.010 |
| (18) | 0 | 0.001 | 0 | 0.010 |
| (19) | 0 | 0.010 | 0 | 0.010 |
| (20) | 0 | 0.015 | 0 | 0.010 |
| (21) | 0 | 0.020 | 0 | 0.010 |
| (22) | 0.010 | 0.010 | 0 | 0.010 |
| (23) | 0 | 0 | 0.010 | 0.010 |
| (24) | 0.010 | 0 | 0.0005 | 0.010 |
| (25) | 0.010 | 0 | 0.001 | 0.010 |
| (26) | 0.010 | 0 | 0.020 | 0.010 |
| (27) | 0.010 | 0 | 0.025 | 0.010 |
| (28) | 0 | 0.010 | 0.0005 | 0.010 |
| (29) | 0 | 0.010 | 0.001 | 0.010 |
| (30) | 0 | 0.010 | 0.020 | 0.010 |
| (31) | 0 | 0.010 | 0.025 | 0.010 |
| (32) | 0.010 | 0.010 | 0.0005 | 0.010 |
| (33) | 0.010 | 0.010 | 0.001 | 0.010 |
| (34) | 0.010 | 0.010 | 0.020 | 0.010 |
| (35) | 0.010 | 0.010 | 0.025 | 0.010 |

### [Evaluation Test]

With respect to the nickel manganese batteries fabricated in the above, the following evaluations (a) to (d) were performed.

### (a) DSC pulse discharge characteristic

With respect to one cell from the batteries fabricated in the above, a pulse discharge was performed in the same manner as in Experimental Example 1. That is, in a 20°C atmosphere, the cell was subjected to an operation in which the cell was discharged at a constant power of 650 mW for 28 seconds and then discharged at a constant power of 1500 mW for two seconds. This operation was regarded as one cycle and repeated until the lower limit voltage in the 1500 mW pulse discharge reached 1.05 V, and the number of cycles repeated was measured. The average values obtained from this evaluation in the case that the number of test cells n = 3 are shown in Table 4.

### (b) 60°C storage test

With respect to five cells (not discharged) from the batteries fabricated in the above, the batteries were stored for one month in a 60°C atmosphere. The number of cells in which leakage occurred during the storage was checked. With respect to the battery in which leakage was observed in none of the five cells, each of all five cells was unsealed and the gas from the cell was collected in water to measure the gas amount in the cell. The existence of leakage and the average amount of gas collected from five cells are shown in Table 4.

### (c) High-rate continuous discharge test in a low temperature environment

One cell from the batteries fabricated in the above was subjected to a continuous discharge at a constant power of 1000 mW in a 0°C atmosphere, and the discharge time until the closed-circuit voltage of the cell reached 1.0 V was measured. The average values obtained from this evaluation in the case that the number of test cells n = 3 are shown in Table 4.

### (d) Low-rate continuous discharge test in a low temperature environment

One cell from the batteries fabricated in the above was subjected to a continuous discharge at a constant resistance of 300 Ω in a 0°C atmosphere, and the discharge time until the closed-circuit voltage reached 0.9 V was measured. The number of cells that had a short life in which the discharge time was two thirds or less of the specified period of time was checked in the case that the number of test cells n = 10. The results are shown in Table 4.

**[Table 4]**

| Battery No. | (a) | (b) | | (c) | (d) |
|---|---|---|---|---|---|
| | DSC pulse discharge characteristic | 60°C storage test | | 0°C 1000 mW discharge time | Number of battery with short life in 0°C 300 Ω discharge |
| | | Number of leaked cell | Amount of gas collected | | |
| | (number of cycles) | (piece) | (mL) | (min) | (piece) |
| (11) | 211 | 5 | - | 31.2 | 0 |
| (12) | 207 | 3 | - | 31.0 | 0 |
| (13) | 202 | 0 | 1.45 | 31.5 | 0 |
| (14) | 205 | 0 | 1.40 | 30.8 | 0 |
| (15) | 204 | 0 | 1.40 | 31.1 | 0 |
| (16) | 202 | 0 | 1.35 | 30.7 | 4 |
| (17) | 209 | 2 | - | 31.3 | 0 |
| (18) | 205 | 0 | 1.25 | 30.6 | 0 |
| (19) | 206 | 0 | 1.20 | 31.2 | 0 |
| (20) | 203 | 0 | 1.20 | 30.9 | 0 |
| (21) | 204 | 0 | 1.20 | 22.8 | 0 |
| (22) | 204 | 0 | 0.90 | 31.1 | 0 |
| (23) | 210 | 4 | - | 31.5 | 0 |
| (24) | 205 | 0 | 1.25 | 31.8 | 0 |
| (25) | 208 | 0 | 0.95 | 32.3 | 0 |
| (26) | 203 | 0 | 0.90 | 32.5 | 0 |
| (27) | 208 | 0 | 0.90 | 32.2 | 3 |
| (28) | 208 | 0 | 1.05 | 32.5 | 0 |
| (29) | 205 | 0 | 0.85 | 32.0 | 0 |
| (30) | 202 | 0 | 0.80 | 32.0 | 0 |
| (31) | 206 | 0 | 0.80 | 32.8 | 4 |
| (32) | 206 | 0 | 0.85 | 31.5 | 0 |
| (33) | 208 | 0 | 0.65 | 30.8 | 0 |
| (34) | 202 | 0 | 0.65 | 31.7 | 0 |
| (35) | 205 | 0 | 0.65 | 31.9 | 5 |

With regard to the pulse discharge characteristic of (a), the results of all batteries were as high as 200 cycles or more. The reason for this was considered that, as in Experimental Example 1, because of the extremely small content of indium of 0.01 wt% in the negative electrode active material, the phenomenon in which the discharge in the negative electrode was inhibited by indium did not appear.

With regard to the 60°C storage test of (b), no leakage occurred in the batteries (13) to (16), (18) to (21), and (22). This indicated that when the negative electrode active material contains aluminum or bismuth in an amount of 0.001 wt% or more, and when the negative electrode active material contained aluminum in an amount of 0.001 wt% or more and bismuth in an amount of 0.001 wt% or more, the improvement in the corrosion resistance could be achieved.

In the battery (23) in which the negative electrode active material contains calcium only as an element other than indium, the leakage resistance was degraded. In the batteries (24) to (27) in which the negative electrode active material included calcium and aluminum besides indium, the amounts of gas collected were smaller than those in the batteries (12) to (17) in which the negative electrode active material included aluminum only besides indium. This presumably indicated that calcium had a function of complementing the effect of improving the corrosion resistance due to aluminum.

Similarly, in the batteries (28) to (31) in which the negative electrode active material included bismuth and calcium besides indium, the amounts of gas collected were smaller than those in the batteries (17) to (21). Moreover, in the batteries (32) to (35) in which the negative electrode active material included aluminum, bismuth, and calcium besides indium, the amounts of gas collected were smaller than that in the battery (22). From these results, it was considered that calcium had a function of complementing the effect of improving the corrosion resistance due to aluminum and bismuth. In particular, in the batteries (25) to (27), (29) to (31), and (33) to (35), the amounts of gas collected were significantly small. Based on the foregoing, in view of the corrosion resistance, it was found that besides at least one selected from aluminum and bismuth, the additional inclusion of calcium in an amount of 0.001 wt% or more was preferred.

With regard to the 1000 mW continuous discharge in a 0°C atmosphere of (c), the characteristic of the battery (21) only in which the content of bismuth in the negative electrode active material was as high as 0.02 wt% was low. A greater content of bismuth in the negative electrode active material tended to inhibit such a heavy-load discharge at a low temperature environment, although the cause for this was unclear in detail. In view of the above, a preferred content of bismuth in the negative electrode active material was 0.015 wt% or less.

With regard to the 300 Ω continuous discharge in a 0°C atmosphere of (d), the battery (16) in which the content of aluminum in the negative electrode active material was 0.025 wt%, and the batteries (27), (31) and (35) in which the content of calcium in the negative electrode active material was 0.025 wt% had a short life. Therefore, preferred contents of aluminum and calcium in the negative electrode active material were respectively 0.02 wt% or less.

As a conclusion of the results above, it was understood that in the negative electrode active material, the content of indium of 0.02 wt% or less, the content of aluminum of 0.001 to 0.02 wt%, and the content of bismuth of 0.001 to 0.015 wt% were preferred, and the additional inclusion of calcium in the negative electrode active material in an amount of 0.001 to 0.02 wt% was more preferred.

It should be noted that although the content of indium in the negative electrode active material was 0.01 wt% in this experimental example, a content of indium within a range of 0 to 0.02 wt% provides the same results.

### <<Experimental Example 3>>

An evaluation was conducted assuming the case where the negative electrode included a cationic surfactant (anticorrosive).
For the negative electrode active material, the one having the same composition as the battery (5) in Experimental Example 1 was used. A surfactant as shown in Table 5 was added thereto in an amount as shown in Table 5 and sufficiently mixed to prepare gelled negative electrodes (a1) to (a5), (b1) to (b5), (c1) to (c5), and (d1) to (d5). Here, the added mount of surfactant in Table 5 is an amount (part by weight) per 100 parts by weight of the negative electrode active material. In addition, a gelled negative electrode (z) for comparison that did not include a surfactant was prepared. Nickel manganese batteries (A1) to (A5), (B1) to (B5), (C1) to (C5), (D1) to (D5), and (Z) were fabricated in the same manner as in Experimental Example 1 except that the gelled negative electrodes thus prepared were used. For the foregoing surfactant, a chemical agent available from Tokyo Chemical Industrial Co., Ltd., an industrial chemical available from Lion Corporation, and the like were used.

**[Table 5]**

| Type of surfactant | | Added amount of surfactant per 100 parts by weight of negative electrode active material | | | | |
|---|---|---|---|---|---|---|
| | | (part by weight) | | | | |
| Chemical formula | Name | 0.001 | 0.002 | 0.010 | 0.020 | 0.025 |
| (CH₃)₄NOH | Tetramethylammonium hydroxide | (a1) | (a2) | (a3) | (a4) | (a5) |
| (C₂H₅)₄NOH | Tetraethylammonium hydroxide | (b1) | (b2) | (b3) | (b4) | (b5) |
| (C₃H₇)₄NOH | Tetrapropylammonium hydroxide | (c1) | (c2) | (c3) | (c4) | (c5) |
| (C₄H₉)₄NOH | Tetrabutylammonium hydroxide | (d1) | (d2) | (d3) | (d4) | (d5) |

### [Evaluation Test]

With respect to the nickel manganese batteries fabricated in the above, the following evaluations (a) and (e) were performed.

### (a) DSC pulse discharge characteristic

With respect to one cell from the batteries fabricated in the above, a pulse discharge was performed in the same manner as in Experimental Example 1. That is, in a 20°C atmosphere, the cell was subjected to an operation in which the cell was discharged at a constant power of 650 mW for 28 seconds and then discharged at a constant power of 1500 mW for two seconds. This operation was regarded as one cycle and repeated until the lower limit voltage in the 1500 mW discharge reached 1.05 V, and the number of cycles repeated was measured. The average values obtained from this evaluation in the case that the number of test cells n = 3 are shown in Table 6.

### (e) Leakage resistance test after partial discharge

With respect to 20 cells each from the batteries fabricated in the above, a partial discharge was performed at a constant resistance of 3.9 Ω for five hours. Thereafter, the cells were stored in a 60°C atmosphere for one month, and the ratio of the number of leaked cells (leakage occurrence rate (%)) was determined. The results are shown in Table 6.

**[Table 6]**

| Battery No. | Chemical formula of surfactant | Added amount of surfactant per 100 parts by weight of negative electrode active material | (a) | (e) |
|---|---|---|---|---|
| | | | DSC pulse DSC pulse discharge characteristic | Leakage occurrence rate after partial discharge and 60°C storage |
| | | (part by weight) | (number of cycles) | (%) |
| (A1) | (CH₃)₄NOH | 0.001 | 205 | 10 |
| (A2) | | 0.002 | 203 | 0 |
| (A3) | | 0.010 | 202 | 0 |
| (A4) | | 0.020 | 201 | 0 |
| (A5) | | 0.025 | 188 | 0 |
| (B1) | (C₂H₅)₄NOH | 0.001 | 208 | 10 |
| (B2) | | 0.002 | 204 | 0 |
| (B3) | | 0.010 | 205 | 0 |
| (B4) | | 0.020 | 202 | 0 |
| (B5) | | 0.025 | 184 | 0 |
| (C1) | (C₃H₇)₄NOH | 0.001 | 204 | 5 |
| (C2) | | 0.002 | 203 | 0 |
| (C3) | | 0.010 | 201 | 0 |
| (C4) | | 0.020 | 203 | 0 |
| (C5) | | 0.025 | 183 | 0 |
| (D1) | (C₄H₉)₄NOH | 0.001 | 175 | 5 |
| (D2) | | 0.002 | 170 | 0 |
| (D3) | | 0.010 | 166 | 0 |
| (D4) | | 0.020 | 164 | 0 |
| (D5) | | 0.025 | 145 | 0 |
| (Z) | Without | | 206 | 20 |

In the batteries (A1), (B1) and (C1) in which the content of tetramethylammonium hydroxide, tetraethylammonium hydroxide, or tetrapropylammonium hydroxide in the negative electrode was 0.001 wt%, the anticorrosion effect was insufficient. In the batteries (A5), (B5) and (C5) in which, the content of surfactant above was 0.025 wt% in the negative electrode, the DSC pulse discharge characteristic was slightly reduced. In the batteries (A2) to (A4), (B2) to (B4), and (C2) to (C4) in which the negative electrode included tetramethylammonium hydroxide, tetraethylammonium hydroxide, or tetrapropylammonium hydroxide in an amount of 0.002 to 0.02 wt%, the DSC pulse discharge characteristic was maintained at 200 cycles or more, and the leakage after the partial discharge was suppressed, providing an excellent leakage resistance.

### <<Experimental Example 4>>

An evaluation was conducted assuming the case where the negative electrode included an anionic surfactant having an alkyl group.
For the negative electrode active material, the one having the same composition as the battery (5) in Experimental Example 1 was used. A surfactant as shown in Table 7 was added thereto in an amount as shown in Table 7 and sufficiently mixed to prepare gelled negative electrodes (e1) to (e5), (f1) to (f5), (g1) to (g5), (h1) to (h5), (i1) to (i5), and (j1) to (j5). Here, the added mount of surfactant in Table 7 is an amount (part by weight) per 100 parts by weight of the negative electrode active material. In addition, a gelled negative electrode (z) for comparison that did not include a surfactant as fabricated in Experimental Example 3 was used. Nickel manganese batteries (E1) to (E5), (F1) to (F5), (G1) to (G5), (H1) to (H5), (I1) to (I5), (J1) to (J5), and (Z) were fabricated in the same manner as in Experimental Example 1 except that the gelled negative electrodes thus prepared were used. For the foregoing surfactant, a chemical agent available from Kanto Chemical Co., Inc. and industrial chemicals available from Kao Corporation and Lion Corporation were used. Further, not shown in Table 7, for any surfactant, the one having a hydrophobic group (a portion represented by CₙH₂ₙ₊₁) with a straight-chain structure was selected.

**[Table 7]**

| Composition of surfactant | | | Added amount of surfactant per 100 parts by weight of negative electrode active material | | | | |
|---|---|---|---|---|---|---|---|
| | | | (part by weight) | | | | |
| Hydrophilic group | Carbon number of hydrophobic group | Chemical formula | 0.005 | 0.01 | 0.1 | 0.5 | 0.6 |
| SO₃⁻ | 4 | C₄H₉-SO₃Na | (e1) | (e2) | (e3) | (e4) | (e5) |
| | 5 | C₅H₁₁-SO₃Na | (f1) | (f2) | (f3) | (f4) | (f5) |
| | 12 | C₁₂H₂₅-SO₃Na | (g1) | (g2) | (g3) | (g4) | (g5) |
| | 18 | C₁₈H₃₇-SO₃Na | (h1) | (h2) | (h3) | (h4) | (h5) |
| | 19 | C₁₉H₃₉-SO₃Na | (i1) | (i2) | (i3) | (i4) | (i5) |
| PO₃²⁻ | 12 | C₁₂H₂₅-O-PO₃Na₂ | (j1) | (j2) | (j3) | (j4) | (j5) |

With respect to the nickel manganese batteries fabricated in the above, the evaluations of (a) DSC pulse discharge characteristic and (e) Leakage resistance test after partial discharge were performed in the same manner as in Experimental Example 3. The results are shown in Table 8.

**[Table 8]**

| Battery No. | Chemical formula of surfactant | Added amount of surfactant per 100 parts by weight of negative electrode active material material | (a) | (e) |
|---|---|---|---|---|
| | | | DSC pulse discharge characteristic | Leakage occurrence rate after partial discharge and 60°C storage |
| | | (part by weight) | (number of cycles) | (%) |
| (E1) | C₄H₉-SO₃Na | 0.005 | 207 | 10 |
| (E2) | | 0.01 | 205 | 5 |
| (E3) | | 0.1 | 205 | 5 |
| (E4) | | 0.5 | 202 | 5 |
| (E5) | | 0.6 | 193 | 5 |
| (F1) | C₅H₁₁-SO₃Na | 0.005 | 206 | 10 |
| (F2) | | 0.01 | 205 | 0 |
| (F3) | | 0.1 | 207 | 0 |
| (F4) | | 0.5 | 204 | 0 |
| (F5) | | 0.6 | 196 | 0 |
| (G1) | C₁₂H₂₅-SO₃Na | 0.005 | 203 | 5 |
| (G2) | | 0.01 | 204 | 0 |
| (G3) | | 0.1 | 201 | 0 |
| (G4) | | 0.5 | 204 | 0 |
| (G5) | | 0.6 | 194 | 0 |
| (H1) | C₁₈H₃₇-SO₃Na | 0.005 | 204 | 5 |
| (H2) | | 0.01 | 203 | 0 |
| (H₃) | | 0.1 | 200 | 0 |
| (H4) | | 0.5 | 201 | 0 |
| (H5) | | 0.6 | 193 | 0 |
| (I1) | C₁₉H₃₉SO₃Na | 0.005 | 197 | 5 |
| (I2) | | 0.01 | 194 | 0 |
| (I3) | | 0.1 | 188 | 0 |
| (I4) | | 0.5 | 183 | 0 |
| (I5) | | 0.6 | 180 | 0 |
| (J1) | C₁₂H₂₅-O-PO₃Na₂ | 0.005 | 197 | 10 |
| (J2) | | 0.01 | 195 | 0 |
| (J3) | | 0.1 | 193 | 0 |
| (J4) | | 0.5 | 195 | 0 |
| (J5) | | 0.6 | 182 | 0 |
| (Z) | Without | | 206 | 20 |

In all of the batteries including a negative electrode with an anionic surfactant having an alkyl group included therein, the leakage occurrence rate after partial discharge was reduced as compared with in the battery (z) including a negative electrode without an anionic surfactant having an alkyl group. In the batteries (E2) to (E4), (F2) to (F4), (G2) to (G4), (H2) to (H4), (I2) to (I4), and (J2) to (J4) in which the content of surfactant in the negative electrode was 0.01 to 0.5 part by weight per 100 parts by weight of the negative electrode active material, excellent DSC pulse discharge characteristic and leakage resistance were obtained.
In particular, in the batteries (F2) to (F4), (G2) to (G4), and (H2) to (H4) in which the negative electrode included sodium alkanesulfonate having a hydrophobic group with a carbon number of 5 to 18 in an amount of 0.01 to 0.5 part by weight per 100 parts by weight of the negative electrode active material, an excellent leakage resistance as well as an excellent DSC pulse discharge characteristic of 200 cycles or more were obtained.

### Industrial Applicability

The alkaline battery according to the present invention is excellent in heavy-load pulse discharge characteristics, and therefore suitably applicable as a power source for digital equipment which consumes a large amount of power (digital still camera etc.) for which the conventional batteries have failed to completely meet the requirements.

## Claims

1. An alkaline battery comprising a positive electrode, a negative electrode, a separator, and an alkaline electrolyte, wherein
said positive electrode includes nickel oxyhydroxide and manganese dioxide as a positive electrode active material,
said negative electrode includes at least zinc as a negative electrode active material, and
a content of indium in said negative electrode active material is 0.02 wt% or less.

2. The alkaline battery in accordance with claim 1, wherein said negative electrode active material contains at least one selected from 0.001 to 0.02 wt% of aluminum and 0.001 to 0.015 wt% of bismuth.

3. The alkaline battery in accordance with claim 2, wherein said negative electrode active material contains 0.001 to 0.02 wt% of calcium.

4. The alkaline battery in accordance with claim 1, wherein said negative electrode or said alkaline electrolyte includes at least one compound selected from the group consisting of a tetramethylammonium compound, a tetraethylammonium compound, and a tetrapropylammonium compound in an amount of 0.002 to 0.02 part by weight per 100 parts by weight of said negative electrode active material.

5. The alkaline battery in accordance with claim 4, wherein said at least one compound is a hydroxide.

6. The alkaline battery in accordance with claim 1, wherein said negative electrode or said alkaline electrolyte includes an anionic surfactant having an alkyl group in an amount of 0.01 to 0.5 part by weight per 100 parts by weight of said negative electrode active material.

7. The alkaline battery in accordance with claim 6, wherein said anionic surfactant is an alkane sulfonic acid with a carbon number of 5 to 18 or a salt thereof.
